# FASCICULE DE BREVET EUROPEEN

(11) **EP 1 371 574 B1**
(45) Date de publication et mention de la délivrance du brevet: **14.12.2005**
(21) Numéro de dépôt: 03291433.5
(22) Date de dépôt: 13.06.2003
(51) Int. Cl.: B65D 81/26, B65D 21/04, B29C 51/22

(54) **Barquette absorbante améliorée avec ou sans barrière et procédé d'obtention**
Absorbierende Schale mit oder ohne Barrierschicht und Verfahren zur Herstellung
Absorbent tray with or without barrier layer and process of manufacture

(30) Priorité: 14.06.2002 FR 0207366
(43) Date de publication de la demande: 17.12.2003
(73) Titulaire: Huhtamaki France S.A., 28700 Auneau (FR)
(72) Inventeur: Benejean, Christophe, 28310 Yermenonville (FR)
(74) Mandataire: Debay, Yves

(56) Documents cités:
- EP-A- 0 743 262
- FR-A- 2 041 489
- FR-A- 2 549 447
- GB-A- 2 322 100
- US-A- 3 155 303

## Description

La présente invention concerne le domaine des emballages en plastique pour les denrées alimentaires. L'invention concerne plus particulièrement une barquette absorbante améliorée avec ou sans barrière et le procédé de fabrication correspondant.

Il est connu de fabriquer des barquettes en matériau thermoformable expansé, réalisées sous forme d'un sandwich comportant deux feuilles dont une est en matériau expansé, la feuille intermédiaire est en matériau absorbant, et la feuille supérieure constituant le fond de la barquette, soit en matériau plastique thermofusible, soit en matière plastique telle qu'un polystyrène. La plupart des procédés connus impliquent des opérations de reprise, notamment consistant à fabriquer tout d'abord un ou plusieurs rouleaux de matière expansée, pour laisser refroidir et rassir cette matière. Ensuite, les rouleaux sont repris sur une chaîne de fabrication de barquettes dans laquelle les deux rouleaux de matière plastique et un rouleau de matière absorbante telle que de la cellulose sont assemblés pour former un sandwich dont la couche centrale est constituée par la matière absorbante. Des perforations sont prévues sur une face de ce sandwich, puis le sandwich est thermoformé, et découpé pour constituer des barquettes. Un tel procédé présente l'inconvénient de nécessiter un réchauffage des matières plastiques en vue de leur thermoformage et un gaspillage en matière absorbante lorsque le ruban de matériau absorbant occupe toute la longueur de la barquette, y compris la partie non utile comme enseigné par la demande de brevet européen EP-A-0 182 139. De plus, la présence de la couche absorbante a pour conséquence de limiter l'étirement de la matière plastique et la profondeur des barquettes ainsi obtenue, et empêche le recyclage des déchets de détourage du fait de la présence de cette matière absorbante.

Il est connu dans l'art antérieur, par la demande de brevet FR 2 041 489, un procédé de fabrication en continu de récipients en matières thermoplastiques expansées avec extrusion et expansion de la matière tout en refroidissant une partie du produit extrudé, de manière à fermer des cellules du polymère en expansion. Ce procédé, permet de produire des récipients expansés, munis d'une peau sur une ou les deux faces. Toutefois, les récipients obtenus par ce procédé n'offre pas de propriétés de barrière pour l'exposition et la conservation de denrées alimentaires sur une longue durée.

Il est connu dans l'art antérieur des barquettes d'emballage en polystyrène incluant un papier absorbant en cellulose. Dans l'optique d'un recyclage du polystyrène comme matière première pour du conditionnement ou pour une autre utilisation, ces barquettes exigent une étape de tri entre le papier et l'emballage en polystyrène. De plus, le papier absorbant colle souvent à l'aliment quand on sort celui-ci de sa barquette.

Il est connu également des barquettes d'emballage avec une couche de matériau présentant des propriétés de barrière à l'eau et au gaz. Les polymères PET, PETG, PMMA, PA, EVOH, PVC, les résines ionomères sont autant d'exemples de matériaux ayant cet effet de barrière. Il est connu l'utilisation en multicouche du copolymère éthylène/alcool vinylique EVOH. La demande de brevet FR 01 09024 par le même déposant, qui concerne une structure multicouche pour le conditionnement et son procédé de fabrication, en est un exemple.

Il est connu des barquettes (PS/EVOH/PE), destinées à la conservation de denrées alimentaires, mises sous vide puis réinjectées sous 100% de CO₂ ou d'un gaz/mélange de gaz neutre à la pression atmosphérique et recouvertes d'un film EVOH/PE imperméable à l'oxygène à 1 cm³/m²/24h. Un absorbeur d'oxygène peut être ajouté au préalable dans ces barquettes. L'objectif essentiel de ces différentes barquettes de l'art antérieur est d'assurer la conservation des aliments stockés pendant une durée plus importante. Toutefois, ces barquettes ne garantissent pas une excellente présentation du produit, sans liquide dans la barquette. La présence d'un papier absorbant en cellulose permet d'améliorer substantiellement cette présentation, mais l'aliment est en contact avec de la cellulose qui pourrait faciliter la prolifération de micro-organismes.

Dans le cas de la viande préemballée, la stabilité de la couleur de celle-ci est le facteur de qualité le plus important qui contribue à sa durée de vie. Le consommateur associe la couleur rouge vif de l'oxymyoglobine à une qualité satisfaisante de viande.

Il est connu dans l'art antérieur des barquettes absorbantes en polystyrène destinées au conditionnement de viande fraîche ou de volaille sans papier absorbant entre la barquette et l'aliment. Le mode de fabrication de ces barquettes repose tout d'abord sur l'expansion du polystyrène dans deux extrudeuses avec coextrusion de deux feuilles. La feuille supérieure est à cellules ouvertes et la feuille inférieure à cellules fermées. Ensuite est ajouté, via une opération de plaxage avec une résine adhésive, un film polystyrène cristal de chaque côté de la double feuille. La feuille complexe ainsi obtenue, comportant 4 couches, est ensuite thermoformée en barquettes dont la surface intérieure est microperforée afin de permettre l'écoulement des liquides vers la couche absorbante sous-jacente à cellules ouvertes. La demande de brevet PCT WO 00/46125 enseigne des barquettes sans papier absorbant, comprenant une barrière pour le conditionnement avec un gaz neutre, obtenues par ce type de procédé. La fabrication de telles barquettes exige une opération de plaxage sur chaque côté de la double feuille pour lier les couches externes aux couches internes. Cette opération peut se montrer délicate à mettre en oeuvre, notamment lorsque l'on souhaite obtenir un profil de barquettes avec de nombreuses nervures sur les surfaces externes. De plus les barrières de fluide (liquide/gaz) sont posées sous la forme d'un film sur les faces externes des barquettes, ces faces externes étant souvent exposées à des chocs. Hors un simple grattage de ce film suffit pour que les propriétés de barrière de la barquette disparaissent. De plus, le document US 3 155 303 décrit une barquette absorbante, conformément au préambule de la revendication 1.

La présente invention a donc pour objet de pallier un ou plusieurs des inconvénients de l'art antérieur en définissant une barquette absorbante, avec ou sans barrière, garantissant un conditionnement esthétique, et dont les constituants sont en matériau de nature chimique identique, permettant un recyclage facile.

A cet effet, l'invention concerne une barquette absorbante, avec ou sans barrière, comprenant un emballage principal thermoformé en matière plastique non expansée telle que du polystyrène ou analogue et une feuille absorbante, ledit emballage principal, comprenant à son fond un logement creux pour recevoir ladite feuille absorbante et des moyens de fixation de ladite feuille absorbante, caractérisée en ce que la feuille absorbante est en matière plastique du même type que la feuille de l'emballage principal mais expansée.

Selon une autre particularité de l'invention, la zone du fond non couverte par la feuille absorbante comporte des rigoles convergeant vers ledit logement.

Selon une autre particularité de l'invention, ledit emballage principal comporte notamment sur chacune de ses faces latérales des nervures au moins verticales adjacentes audites rigoles.

Selon une autre particularité de l'invention, ledit emballage principal comporte un bord en forme de collerette et des nervures selon un axe vertical permettant l'empilement de plusieurs barquettes, l'épaisseur dudit emballage principal restant en tout point sensiblement constante.

Selon une autre particularité de l'invention, ladite feuille absorbante est perforée sur au moins une de ses faces et est maintenue dans le logement de l'emballage principal par aux moins deux ergots formant sensiblement une gorge dans le logement dudit emballage.

Selon une autre particularité de l'invention, la feuille absorbante de polystyrène expansé est perforée, avec des couches de structure externe à cellules fermées et au moins une couche interne à cellules ouvertes.

Selon une autre particularité de l'invention, ledit logement creux a une profondeur, correspondant sensiblement à l'épaisseur de la feuille absorbante, comprise entre 2 et 8 mm, lesdites rigoles étant adjacentes audit logement.

Selon une autre particularité de l'invention, un épaulement est formé dans la partie haute des parois latérales de l'emballage principal, la distance entre l'épaulement et le bord en collerette étant déterminée pour éviter le contact entre les bords en collerette de deux barquettes empilées l'une sur l'autre.

Selon une autre particularité de l'invention, ledit logement dans l'emballage principal a une forme rectangulaire avec des angles droits ou arrondis, la base du logement étant plane, la surface dudit logement représentant au moins 40% de la surface correspondant au fond de la barquette.

Selon une autre particularité de l'invention, des faces verticales opposées de l'emballage principal comportent des dissymétries permettant selon une première orientation des barquettes les unes par rapport aux autres de les empiler et selon une deuxième orientation où une des barquettes a subi une rotation de 180° par rapport à l'axe d'empilement d'amener les dissymétries en vis-à-vis à la verticale pour que la barquette supérieure soit maintenue avec son fond au niveau du bord en collerette de la barquette inférieure.

Selon une autre particularité de l'invention, ledit emballage principal comporte une couche barrière aux fluides, placée du côté de l'intérieur de la barquette.

Selon une autre particularité, ladite couche barrière consiste en EVOH, la barquette étant fermée au moyen d'un film barrière transparent comprenant au moins un matériau imperméable à l'oxygène.

Selon une autre particularité, ladite couche barrière est liée à une couche de polystyrène par l'intermédiaire d'une couche adhésive comprenant de l'anhydride maléique greffée sur du polypropylène.

Un autre but de l'invention est d'apporter une solution à un ou plusieurs des problèmes rencontrés dans l'art antérieur en définissant un procédé aboutissant aux barquettes selon l'invention.

Ce but est atteint par un procédé de fabrication de barquettes absorbantes, avec ou sans barrière, à partir de granulés en polystyrène, comprenant l'élaboration de l'emballage principal de la barquette en matériau thermoformable par formage sur une roue de formage pourvue d'alvéoles de conformation du matériau expansé en barquette, caractérisé en qu'il comporte les étapes suivantes :
- moulage par aspiration sous vide dudit emballage principal dans lesdites alvéoles de conformation avec formation de rigoles et d'un logement creux sensiblement plat situé au fond dudit emballage principal, et comprenant des moyens de fixation,
- élaboration par extrusion d'une feuille absorbante en polystyrène expansé, avec des couches de structure externe à cellules fermées et au moins une couche interne à cellules ouvertes,
- perçage de trous sur au moins une face de ladite feuille absorbante,
- fixation d'une feuille absorbante en matériau expansé dans ledit logement de l'emballage principal,
- découpe finale en synchronisme avec la position des alvéoles.

Selon une autre particularité de l'invention, une couche barrière aux fluides est insérée, à l'aide d'une couche adhésive intermédiaire, sur la face intérieure de l'emballage principal avant le formage sur ladite roue de formage.

L'invention, avec ses caractéristiques et avantages, ressortira plus clairement à la lecture de la description faite en référence aux dessins annexés dans lesquels :
- la figure 1 représente une vue en coupe d'une barquette dans un mode de réalisation de l'invention,
- la figure 2 représente schématiquement les principales étapes du procédé selon l'invention,
- la figure 3 représente une vue plane du dessus d'un mode de réalisation d'une barquette selon l'invention,
- les figures 4a et 4b représentent l'empilement de plusieurs barquettes selon l'invention.

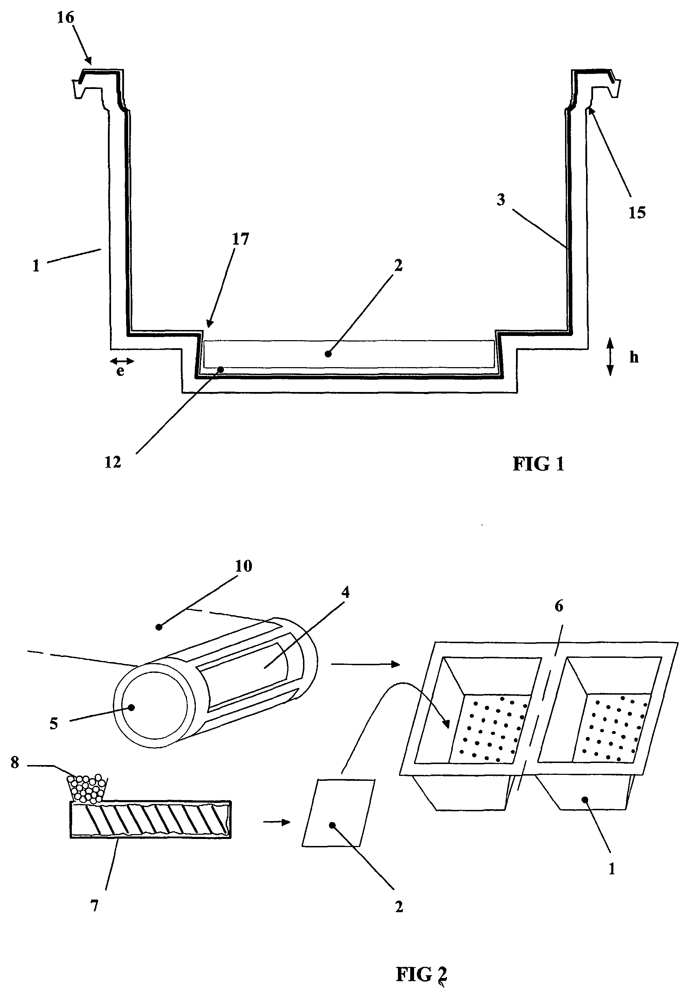

L'invention va être à présent décrite en référence aux figures 1 et 2. Le matériau de structure utilisé pour l'élaboration de l'emballage principal et la feuille absorbante est préférentiellement du polystyrène.

Comme présenté en figure 1, la barquette selon l'invention comprend un emballage principal (1) en polystyrène, moulé et rendu rigide par thermoformage. Dans une variante de l'invention, la matière première utilisée est constituée de granulés (8) de polystyrène. Après une transformation classique du thermoformage pour obtenir le polymère expansé sous forme d'une feuille continue (10), le polystyrène est moulé, par aspiration sous vide, dans les alvéoles (4) de conformation d'une roue de formage (5). L'emballage principal (1) de la barquette ainsi obtenu a la forme d'une barquette et comporte à son fond un logement (12) creux sensiblement plat, dont la profondeur (h) est de préférence inférieure à 1 cm. Cette profondeur (h) dudit logement (12) est comprise par exemple entre 2 et 8 mm. La forme du logement (12) peut être rectangulaire avec des angles droits ou arrondis. La base du logement (12) est plane et sa surface représente au moins 40% de la surface correspondant au fond de la barquette.

La barquette selon l'invention comprend également une feuille absorbante (2) qui est insérée dans ledit logement (12) de l'emballage principal (1). Cette feuille absorbante (2) est en matière plastique du même type que la feuille (10) de l'emballage principal (1) mais expansée. La feuille absorbante (2) est avantageusement, et de manière non limitative, en polystyrène expansé. Elle comprend des couches externes à cellules fermées et au moins une couche interne à cellules ouvertes qui permet d'absorber des liquides tel que le jus de viande. Les dimensions de la feuille absorbante (2) ne dépassent pas celle du fond de l'emballage. Celle-ci a une épaisseur sensiblement égale à la profondeur (h) du logement (12) dans lequel elle est insérée. Dans le mode de réalisation préféré de l'invention, la forme de la feuille absorbante (2) est sensiblement la même que la forme du logement (12) de l'emballage principal (1). Des moyens de fixation (17) disposés à la périphérie dudit logement (12) permettent de maintenir la feuille absorbante (2) dans sa position. Ces moyens de fixation (17) sont par exemple au moins deux ergots d'accrochage. Dans un mode de réalisation de l'invention, deux ergots en vis-à-vis forment sensiblement une gorge dans le logement (12) destiné à la feuille absorbante (2), de façon que ladite feuille (2) vienne se clipser dans le logement (12).

Dans le mode de réalisation de l'invention représenté à la figure 1, l'épaisseur (e) de l'emballage principal (1) est sensiblement constante. Dans une variante, une couche barrière (3) aux fluides est placée du côté de l'intérieur de l'emballage principal (1). Cette couche barrière (3), assurant une imperméabilité vis-à-vis des liquides et des gaz, permet d'éviter une oxydation trop précoce par l'oxygène de l'air du contenu de la barquette. La barquette comprend également un film barrière transparent (non représenté) comprenant au moins un matériau imperméable à l'oxygène. Ce film est inséré après remplissage des denrées dans la barquette. La couche barrière (3) peut consister en EVOH. Le film transparent comporte par exemple deux couches : EVOH/PE. Le film recouvre l'ouverture de l'emballage principal (1) et est fixé au bord (16) replié ou bord en collerette dudit emballage (1). La couche barrière (3) aux fluides est insérée, à l'aide d'une couche adhésive intermédiaire, sur la face intérieure de l'emballage principal (1) avant le formage sur ladite roue de formage (5). Dans un mode de réalisation de l'invention, la couche adhésive intermédiaire comprend de l'anhydride maléique greffée sur du polypropylène.

Comme représenté à la figure 2, le processus de fabrication de la barquette selon l'invention fait intervenir, par extrusion de granulés (8) de polystyrène dans une extrudeuse (7), l'élaboration d'une feuille (2) de polystyrène expansé. Cette feuille (2) est perforée sur au moins une de ses faces, et de préférence sur ses deux faces, avant d'être clipsée dans son logement (12), par une simple pression exercée vers la base de l'emballage principal (1). Une étape finale de découpe (6), en synchronisme avec la position des alvéoles (4), est effectuée pour la séparation des barquettes. La découpe (6) est réalisée par exemple à l'aide de machines à couper dirigées par ordinateur. La conformation des alvéoles (4) de la roue de formage (5) assure le moulage de rigoles (11) au moins verticales dans les parois de l'emballage principal (1). Ces alvéoles comprennent également une cavité au fond pour la formation du logement (12) plat situé dudit emballage principal (1).

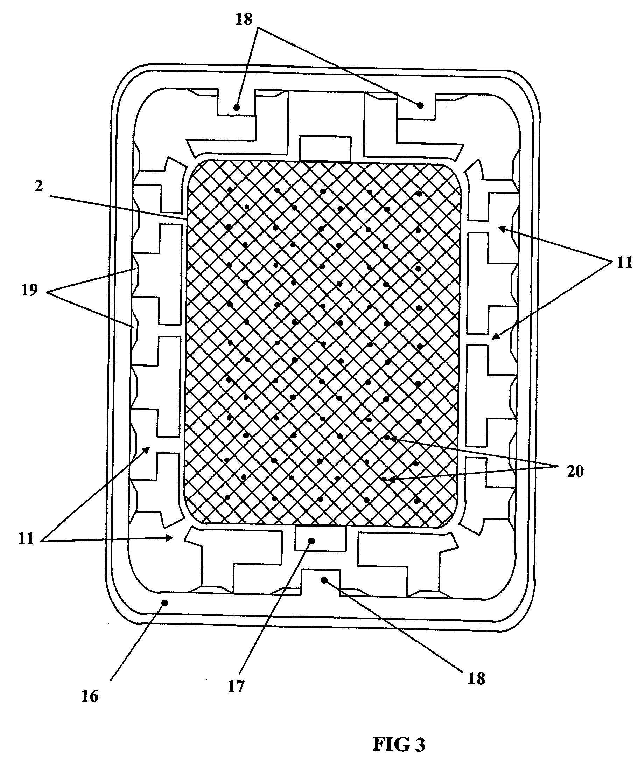

L'invention va être à présent décrite en référence à la figure 3.

Dans un mode de réalisation de l'invention, la zone du fond non couverte par la feuille absorbante (2) comporte des rigoles (11) destinées à l'écoulement naturel de liquides provenant des denrées placées dans la barquette. Ces rigoles (11) convergent vers le logement (12) contenant la feuille absorbante (2). Elles sont par exemple horizontales ou légèrement inclinées. Les liquides tels que le jus de viande sont ainsi conduits vers les perforations (20) de la feuille absorbante (2). Ces liquides peuvent être absorbés à l'intérieur de celle-ci, dans la couche de polystyrène expansé à cellules ouvertes. Les rigoles (11) sont avantageusement adjacentes au logement (12) contenant la feuille absorbante (2). L'écartement entre deux rigoles est par exemple de l'ordre de un à quatre centimètres.

Dans une variante de l'invention, des nervures (19) sont disposées dans les parois latérales de la barquette. Ces nervures (19) servent de renfort et facilitent l'empilement d'une pluralité de barquettes. Elles sont par exemple adjacentes aux rigoles (11). Les parois latérales sont sensiblement verticales et peuvent comporter sur des faces verticales opposées des dissymétries (18) permettant selon une première orientation des barquettes les unes par rapport aux autres de les empiler et selon une deuxième orientation où une des barquettes a subi une rotation de 180° par rapport à l'axe d'empilement d'amener les dissymétries en vis-à-vis à la verticale pour que la barquette supérieure soit maintenue avec son fond au niveau du bord (16) en collerette de la barquette inférieure. Ces dissymétries (18) peuvent être simplement de grosses nervures verticales ou quasi verticales, avec un relief plus accentué, comme représenté à la figure 3, et dont l'étendue correspond sensiblement à la hauteur des barquettes. La complémentarité des dissymétries (18) des barquettes selon la première orientation facilite l'empilement des barquettes vides, tandis que selon la deuxième orientation l'absence de complémentarité permet la superposition des barquettes remplies et recouvertes de leur film de protection, sans autre appui sur le dessus d'une barquette que le contact au niveau desdites dissymétries (18). Ce système permet notamment d'éviter des frottements pouvant altérer les parois ou le film de la barquette.

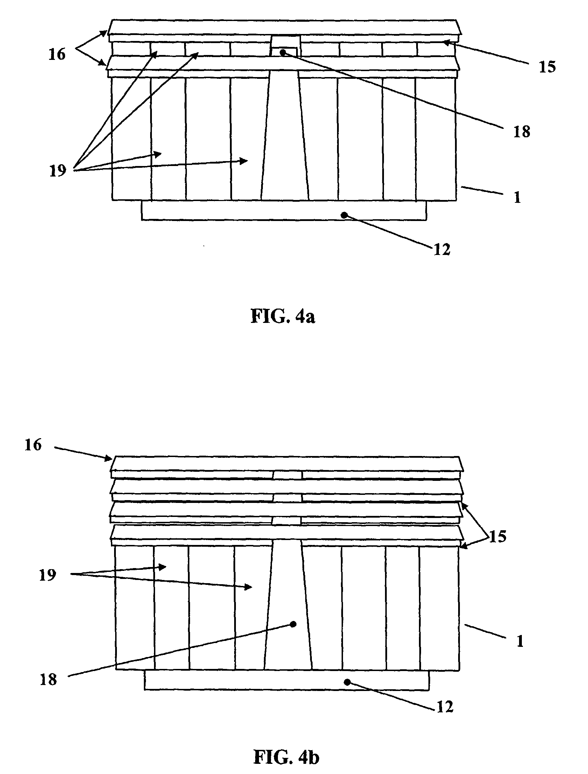

L'invention va être à présent décrite en référence aux figures 4a et 4b.

Les barquettes selon l'invention peuvent être aisément empilées sans perte de volume. Comme représenté aux figures 4a et 4b, le dessous de l'épaulement (15) formé dans les parois latérales de la barquette est destiné à venir en butée contre le bord (16) en collerette sur laquelle elle est empilée. La distance entre le bord en collerette et l'épaulement est déterminé pour éviter le contact entre les collerettes de deux barquettes adjacentes dans l'empilement. En évitant un tel contact, on facilite l'opération de séparation ultérieure des barquettes.

Un des avantages de l'invention réside dans le fait que le conditionnement de denrées alimentaires, notamment des viandes, est particulièrement esthétique. Le produit est bien visible par le consommateur à travers le film transparent. Le choix du consommateur sera déterminé par l'aspect attractif du produit et la moindre trace de liquide, le moindre changement de couleur dû à l'oxydation de l'air suffisent pour qu'un produit soit totalement délaissé. La barquette selon l'invention permet justement d'absorber de manière naturelle, grâce à des rigoles régulièrement espacées, tout liquide qui d'ordinaire se diffuse dans la barquette.

Un autre des avantages de l'invention réside dans sa grande fonctionnalité. Essentiellement constituée de polystyrène, la barquette est aisément recyclable. Elle offre de plus les qualités de rigidité et de résistance adéquates pour ce type d'emballage tout en conservant, grâce à la feuille absorbante (2) insérée dans l'emballage principal (1), une forte capacité d'absorption des liquides.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Barquette absorbante, avec ou sans barrière, comprenant un emballage principal (1) thermoformé en matière plastique non expansée telle que du polystyrène ou analogue et une feuille absorbante (2), ledit emballage principal (1), comprenant à son fond un logement (12) creux pour recevoir ladite feuille absorbante (12) et des moyens de fixation (17) de ladite feuille absorbante (2), **caractérisée en ce que** la feuille absorbante (2) est en matière plastique du même type que la feuille (10) de l'emballage principal (1) mais expansée.

2. Barquette selon la revendication 1 dans laquelle la zone du fond non couverte par la feuille absorbante (2) comporte des rigoles (11) convergeant vers ledit logement (12).

3. Barquette selon la revendication 1, dans laquelle ledit emballage principal (1) comporte notamment sur chacune de ses faces latérales des nervures (19) au moins verticales adjacentes audites rigoles (11).

4. Barquette selon l'une des revendications 1 à 3, dans laquelle ledit emballage principal (1) comporte un bord (16) en forme de collerette et des nervures (19) selon un axe vertical permettant l'empilement de plusieurs barquettes, l'épaisseur (e) dudit emballage principal (1) restant en tout point sensiblement constante.

5. Barquette selon l'une des revendications 1 à 4, dans laquelle ladite feuille absorbante (2) est perforée sur au moins une de ses faces et est maintenue dans le logement (12) de l'emballage principal (1) par aux moins deux ergots formant sensiblement une gorge dans le logement (12) dudit emballage (1).

6. Barquette selon la revendication 5, dans laquelle la feuille absorbante (2) de polystyrène expansé est perforée, avec des couches de structure externe à cellules fermées et au moins une couche interne à cellules ouvertes.

7. Barquette selon l'une quelconque des revendications 1 à 6, dans laquelle ledit logement (12) creux a une profondeur (h), correspondant sensiblement à l'épaisseur de la feuille absorbante (2), comprise entre 2 et 8 mm, lesdites rigoles (11) étant adjacentes audit logement (12).

8. Barquette selon l'une quelconque des revendications 4 à 7, dans laquelle un épaulement (15) est formé dans la partie haute des parois latérales de l'emballage principal (1), la distance entre l'épaulement et le bord (16) en collerette étant déterminée pour éviter le contact entre les bords (16) en collerette de deux barquettes empilées l'une sur l'autre.

9. Barquette selon l'une quelconque des revendications 1 à 8, dans laquelle ledit logement (12) dans l'emballage principal a une forme rectangulaire avec des angles droits ou arrondis, la base du logement (12) étant plane, la surface dudit logement (12) représentant au moins 40% de la surface correspondant au fond de la barquette.

10. Barquette selon l'une quelconque des revendications 1 à 9, dans laquelle des faces verticales opposées de l'emballage principal (1) comportent des dissymétries (18) permettant selon une première orientation des barquettes les unes par rapport aux autres de les empiler et selon une deuxième orientation où une des barquettes a subi une rotation de 180° par rapport à l'axe d'empilement d'amener les dissymétries (18) en vis-à-vis à la verticale pour que la barquette supérieure soit maintenue avec son fond au niveau du bord (16) en collerette de la barquette inférieure.

11. Barquette selon l'une quelconque des revendications 1 à 10, dans laquelle ledit emballage principal (1) comporte une couche barrière (3) aux fluides, placée du côté de l'intérieur de la barquette.

12. Barquette selon la revendication 11, dans laquelle ladite couche barrière (3) consiste en EVOH, la barquette étant fermée au moyen d'un film barrière transparent comprenant au moins un matériau imperméable à l'oxygène.

13. Barquette selon l'une revendications 11 ou 12, dans laquelle ladite couche barrière (3) est liée à une couche de polystyrène par l'intermédiaire d'une couche adhésive comprenant de l'anhydride maléique greffée sur du polypropylène.

14. Procédé de fabrication de barquettes absorbantes, avec ou sans barrière, à partir de granulés en polystyrène, comprenant l'élaboration de l'emballage principal (1) de la barquette en matériau thermoformable par formage sur une roue de formage (5) pourvue d'alvéoles (4) de conformation du matériau expansé en barquette, **caractérisé en qu'**il comporte les étapes suivantes :
- moulage par aspiration sous vide dudit emballage principal (1) dans lesdites alvéoles (4) de conformation avec formation de rigoles (11) et d'un logement (12) creux sensiblement plat situé au fond dudit emballage principal (1), et comprenant des moyens de fixation,
- élaboration par extrusion d'une feuille absorbante (2) en polystyrène expansé, avec des couches de structure externe à cellules fermées et au moins une couche interne à cellules ouvertes,
- perçage de trous (20) sur au moins une face de ladite feuille absorbante (2),
- fixation d'une feuille absorbante (2) en matériau expansé dans ledit logement (12) de l'emballage principal (1),
- découpe finale (6) en synchronisme avec la position des alvéoles (4).

15. Procédé selon la revendication 14, dans lequel une couche barrière (3) aux fluides est insérée, à l'aide d'une couche adhésive intermédiaire, sur la face intérieure de l'emballage principal (1) avant le formage sur ladite roue de formage (5).

## Patentansprüche

1. Absorbierende Schale, mit oder ohne Barriere, wobei die Schale eine thermogeformte Hauptverpackung (1) aus nicht geschämtem Kunststoffmaterial wie etwa Polystyrol oder dergleichen und eine absorbierende Folie (2) aufweist, wobei die Hauptverpackung (1) an ihrem Boden eine hohle Aufnahme (12), die die absorbierende Folie (2) aufnimmt, sowie Mittel (17) zur Befestigung der absorbierenden Folie (2) aufweist, **dadurch gekennzeichnet, dass** die absorbierende Folie (2) aus einem Kunststoffmaterial des gleichen Typs wie die Folie (10) der Hauptverpackung (1) besteht, wobei das Kunststoffmaterial jedoch geschäumt ist.

2. Schale nach Anspruch 1, bei der der Bodenbereich, der von der absorbierenden Folie (2) nicht bedeckt ist, Rinnen (11) aufweist, die zur Aufnahme (12) zusammenlaufen.

3. Schale nach Anspruch 1, bei der die Hauptverpackung (1) insbesondere an jeder ihrer Seitenflächen zumindest senkrechte, an die Rinnen (11) angrenzende Rippen (19) aufweist.

4. Schale nach einem der Ansprüche 1 bis 3, bei der die Hauptverpackung (1) einen kragenförmigen Rand (16) und Rippen (19) entlang einer vertikalen Achse aufweist, die das Stapeln mehrerer Schalen ermöglichen, wobei die Dicke (e) der Hauptverpackung (1) an jeder Stelle im Wesentlichen gleichmäßig bleibt.

5. Schale nach einem der Ansprüche 1 bis 4, bei der die absorbierende Folie (2) an mindestens einer ihrer Flächen perforiert und durch mindestens zwei Vorsprünge, die in der Aufnahme (12) der Verpackung (1) im Wesentlichen eine Nut bilden, in der Aufnahme (12) der Hauptverpackung (1) gehalten ist.

6. Schale nach Anspruch 5, bei der die absorbierende Folie (2) aus geschäumtem Polystyrol perforiert ist und geschlossenzellige Außenstrukturschichten sowie mindestens eine offenzellige Innenschicht aufweist.

7. Schale nach einem der Ansprüche 1 bis 6, bei der die hohle Aufnahme (12) eine Tiefe (h) besitzt, die im Wesentlichen der Dicke der absorbierenden Folie (2) entspricht und zwischen 2 und 8 mm beträgt, wobei die Rinnen (11) an die Aufnahme (12) angrenzen.

8. Schale nach einem der Ansprüche 4 bis 7, bei der im oberen Teil der Seitenwände der Hauptverpackung (1) ein Absatz (15) ausgebildet ist, wobei der Abstand zwischen dem Absatz und dem kragenförmigen Rand (16) so bestimmt ist, dass der Kontakt zwischen den kragenförmigen Rändern (16) von zwei aufeinandergestapelten Schalen vermieden wird.

9. Schale nach einem der Ansprüche 1 bis 8, bei der die Aufnahme (12) in der Hauptverpackung eine rechteckige Form mit rechten oder abgerundeten Winkeln besitzt, wobei der Sitz der Aufnahme (12) eben ist, wobei die Oberfläche der Aufnahme (12) mindestens 40% der dem Boden der Schale entsprechenden Oberfläche ausmacht.

10. Schale nach einem der Ansprüche 1 bis 9, bei der senkrechte, gegenüberliegende Flächen der Hauptverpackung (1) Unebenmäßigkeiten (18) aufweisen, so dass bei einer ersten Ausrichtung der Schalen zueinander diese gestapelt werden können und bei einer zweiten Ausrichtung, in der eine der Schalen bezüglich der Stapelachse um 180° gedreht wurde, die Unebenmäßigkeiten (18) in der Senkrechte einander gegenüber gelangen können, so dass die obere Schale mit ihrem Boden auf der Ebene des kragenförmigen Randes (16) der unteren Schale gehalten ist.

11. Schale nach einem der Ansprüche 1 bis 10, bei der die Hauptverpackung (1) eine Barriereschicht (3) gegen Fluide aufweist, welche an der Innenseite der Schale angeordnet ist.

12. Schale nach Anspruch 11, bei der die Barriereschicht (3) aus EVOH besteht, wobei die Schale durch einen durchsichtigen Barrierefilm geschlossen ist, der mindestens ein sauerstoffundurchlässiges Material aufweist.

13. Schale nach Anspruch 11 oder 12, bei der die Barriereschicht (3) durch eine Haftschicht, die auf Polypropylen aufgebrachtes Maleinsäureanhydrid aufweist, mit einer Polystyrolschicht verbunden ist.

14. Verfahren zur Herstellung von absorbierenden Schalen, mit oder ohne Barriere, auf der Basis von Polystyrol-Granulat, wobei es das Herstellen der Hauptverpackung (1) der Schale aus thermoformbarem Material durch Formen auf einem Formrad (5) umfasst, welches mit Zellen (4) zur Formung des geschäumten Materials als Schale versehen ist, **dadurch gekennzeichnet, dass** es die folgenden Schritte umfasst:
- Formen der Hauptverpackung (1) durch Vakuumeinsaugung in den Formgebungszellen (4) unter Ausbildung der Rinnen (11) und einer hohlen Aufnahme (12), welche im Wesentlichen flach, am Boden der Hauptverpackung (1) angeordnet ist und Befestigungsmittel aufweist,
- Herstellung einer absorbierenden Folie (2) aus geschäumtem Polystyrol durch Extrudieren, wobei die absorbierende Folie geschlossenzellige Außenstrukturschichten und mindestens eine offenzellige Innenschicht aufweist,
- Bohren von Löchern (20) auf mindestens einer Fläche der absorbierenden Folie (2),
- Befestigen einer absorbierenden Folie (2) aus geschäumtem Material in der Aufnahme (12) der Hauptverpackung (1),
- Endschnitt (6) synchron zur Position der Zellen (4).

15. Verfahren nach Anspruch 14, bei dem vor dem Formen auf dem Formrad (5) eine Barriereschicht (3) gegen Fluide mit Hilfe einer Haftzwischenschicht auf die Innenfläche der Hauptverpackung (1) aufgebracht wird.

## Claims

1. Absorbent tray, with or without a barrier, comprising a thermoformed main pack (1) made of non-expanded plastic material such as polystyrene or the like and an absorbent sheet (2), said main pack (1) comprising at its bottom a hollow recess (12) for receiving said absorbent sheet (12) and means for fixing (17) said absorbent sheet (2), **characterised in that** the absorbent sheet (2) is made of plastic material of the same type as the sheet (10) of main pack (1) but expanded.

2. Tray according to Claim 1, in which the zone of the bottom that is not covered by the absorbent sheet (2) comprises channels (11) converging towards said recess (12).

3. Tray according to Claim 1, in which said main pack (1) comprises, in particular on each of its side faces, ribs (19) that are at least vertical adjacent to said channels (11).

4. Tray according to one of Claims 1 to 3, in which said main pack (1) comprises an edge (16) in the shape of a flange and ribs (19) along a vertical axis permitting the stacking of several trays, the thickness (e) of said main pack (1) remaining substantially constant at all points.

5. Tray according to one of Claims 1 to 4, in which said absorbent sheet (2) is perforated on at least one its faces and is held in the recess (12) of the main pack (1) by at least two stubs forming substantially a groove in the recess (12) of said pack (1).

6. Tray according to Claim 5, in which the absorbent sheet (2) of expanded polystyrene is perforated, having layers of external structure with closed cells and at least one internal layer with open cells.

7. Tray according to any one of Claims 1 to 6, in which said hollow recess (12) has a depth (h), corresponding substantially to the thickness of the absorbent sheet (2), comprised between 2 and 8 mm, said channels (11) being adjacent to said recess (12).

8. Tray according to any one of Claims 4 to 7, in which a shoulder (15) is formed in the high part of the side walls of the main pack (1), the distance between the shoulder and the flange-type edge (16) being determined so as to avoid contact between the flange-type edges (16) of two trays stacked on top of one another.

9. Tray according to any one of Claims 1 to 8, in which said recess (12) in the main pack is rectangular in shape with right-angled or rounded corners, the base of the recess (12) being flat, the surface area of said recess (12) representing at least 40% of the surface area corresponding to the bottom of the tray.

10. Tray according to any one of Claims 1 to 9, in which opposite vertical faces of the main pack (1) comprise dissymmetries (18) making it possible, in a first orientation of the trays to each other, to stack them and, in a second orientation where one of the trays has been rotated by 180° to the axis of stacking, to bring the dissymmetries (18) facing the vertical so that the upper tray is held with its bottom level with the flange-type edge (16) of the lower tray.

11. Tray according to any one of Claims 1 to 10, in which said main pack (1) comprises a fluid-barrier layer (3), placed on the side of the interior of the tray.

12. Tray according to Claim 11, in which said barrier layer (3) consists of EVOH, the tray being closed by means of a transparent barrier film comprising at least one material impervious to oxygen.

13. Tray according to one of Claims 11 or 12, in which said barrier layer (3) is linked to a layer of polystyrene via an adhesive layer comprising maleic anhydride grafted onto polypropylene.

14. Method for producing absorbent trays, with or without barrier, from polystyrene granules, comprising the preparation of the main pack (1) of the tray made of thermoformable material by shaping on a shaping wheel (5) provided with cells (4) for forming the expanded material into a tray, **characterised in that** it comprises the following steps:
- vacuum aspiration moulding of said main pack (1) in said conformation cells (4) with formation of channels (11) and a substantially flat hollow recess (12) located at the bottom of said main pack (1), and comprising fixing means,
- production by extrusion of an absorbent sheet (2) made of expanded polystyrene, having layers of external structure with closed cells and at least one internal layer with open cells,
- perforation of holes (20) on at least one face of said absorbent sheet (2),
- fixing of an absorbent sheet (2) made of expanded material in said recess (12) of the main pack (1),
- final cutting out (6) in synchronism with the position of the cells (4).

15. Method according to Claim 14, in which a fluid-barrier layer (3) is inserted, using an intermediate adhesive layer, on the inner face of the main pack (1) before shaping on said shaping wheel (5).
